# EUROPEAN PATENT APPLICATION

(11) **EP 2 157 518 A1**
(43) Date of publication of application: **24.02.2010**
(21) Application number: 08162604.6
(22) Date of filing: 19.08.2008
(51) Int. Cl.: G06F 17/30

(54) **Method for delivering data**

(71) Applicant: Tieto Oyj, 00440 Helsinki (FI)
(72) Inventor: Myllylahti, Jari, 00840, Helsinki (FI)
(74) Representative: Simmelvuo, Markku Kalevi

(57) **Abstract**

The invention discloses a method for aggregating data with a deliverer. The method comprises: selecting a stage table bucket from a stage table, the bucket comprising source data and being identified by a bucket identifier; reading a subset of the source data contained in the bucket, the subset being determined by predetermined subset definition data; aggregating, based on the subset definition data, the read subset of the source data; inserting the aggregated information into an aggregate table bucket in an aggregate table, the aggregate table bucket having the bucket identifier; and updating bucket deliverer metadata.

## Description

### FIELD OF THE INVENTION

The present invention relates to data management systems. Particularly, the invention relates to a novel method, a module and a computer program for delivering data.

### BACKGROUND OF THE INVENTION

Databases are typically used to store various kinds of data put in a certain format. In order to store data, a solution has to be provided to collect data into the database.

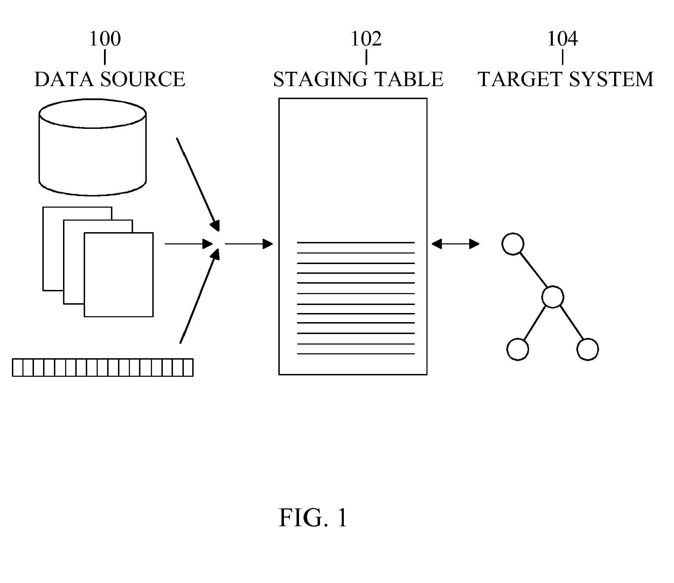

One a very typical way to collect data into a database system is to use an intermediate data store in the data collection process. Figure 1 discloses one example of a simple data collection and analyzing architecture. A data source 100 is a source that generates data about e.g. transactions. An exemplary transaction could be a sales transaction. A sales transaction occurs e.g. when one pays for his/her purchase at a cash desk. The cash register generates a transaction that includes e.g. time/date, what was purchased and what was the total amount of the purchases. A data source 100 represents the data source that temporarily stores the transaction data. The data source may take any appropriate form of data storage from which it is possible to load data for further processing. The data source 100 is e.g. a database or a flat file.

A data management system includes one or more loading processes that are arranged to load data from the data source into a temporary data storage area that is often called as "a staging area" or a "staging table" 102. The staging table 102 may, for example, include data relating to all the transactions of a single day. The data is typically indexed in the staging table 102. The loading process loads, for example, a whole day's transactions or for example 10000 transactions from the data source at a time. Since the amount of data in the staging table is considerable, it takes time to process the data further and to get detailed information e.g. from sales of different items. One of the drawbacks of this solution is that it is not possible to get real-time or near real-time reporting from the source data.

Based on the above there is an obvious need for a data management system that would mitigate and/or alleviate the above drawbacks.

### SUMMARY OF THE INVENTION

According to an aspect of the invention, there is provided a method for aggregating data with a deliverer. The method comprises selecting a stage table bucket from a stage table, the bucket comprising source data and being identified by a bucket identifier; reading a subset of the source data contained in the bucket, the subset being determined by predetermined subset definition data; aggregating, based on the subset definition data, the read subset of the source data; inserting the aggregated information into an aggregate table bucket in an aggregate table, the aggregate table bucket having the bucket identifier; and updating bucket deliverer metadata.

In one embodiment, the method further comprises updating status information of the bucket in bucket metadata to 'delivering', when the bucket deliverer starts delivering the data in the bucket.

In one embodiment, the method further comprises updating the bucket deliverer metadata, when starting processing the bucket, the updating comprising: adding a deliverer identifier in the bucket deliverer metadata; and adding a deliverer start time in the bucket deliverer metadata.

In one embodiment, the method further comprises updating the bucket deliverer metadata, when ending the bucket processing, the updating comprising: adding a deliverer end time in the bucket deliverer metadata.

In one embodiment, the method further comprises checking, whether the bucket deliverer metadata comprises other deliverer identifiers identifying delivery processes that process the bucket; checking, whether there exists a deliverer end time for each deliverer identifier; and updating the status information in the bucket metadata to 'delivered', when there exists a deliverer end time for each deliver identifier.

In one embodiment, the deliverer comprises metadata comprising at least one of the following: an identifier of the deliverer; a name of the deliverer; a type of the deliverer; a description for the deliverer; priority of the deliverer; and a target bucket type of the deliverer.

According to another aspect of the invention, there is provided a delivery module for delivering data. The delivery module is configured to: select a stage table bucket from a stage table, the bucket comprising source data and being identified by a bucket identifier; read a subset of the source data contained in the bucket, the subset being determined by predetermined subset definition data; aggregate, based on the subset definition data, the read subset of the source data; insert the aggregated information into an aggregate table bucket in an aggregate table, the aggregate table bucket having the bucket identifier; and update bucket deliverer metadata.

In one embodiment, the delivery module is further configured to update status information of the bucket in bucket metadata to 'delivering', when the bucket deliverer starts delivering the data in the bucket.

In one embodiment, the delivery module is further configured to update the bucket deliverer metadata, when starting processing the bucket, the updating comprising: adding a deliverer identifier in the bucket deliverer metadata; and adding a deliverer start time in the bucket deliverer metadata.

In one embodiment, the delivery module is further configured to update the bucket deliverer metadata, when ending the bucket processing, the updating comprising: addind a deliverer end time in the bucket deliverer metadata.

In one embodiment, the delivery module is further configured to check, whether the bucket deliverer metadata comprises other deliverer identifiers identifying delivery processes that process the same bucket; check, whether there exists a deliverer end time for each deliverer identifier; and update the status information in the bucket metadata to 'delivered', when there exists a deliverer end time for each deliverer identifier.

In one embodiment, the deliverer comprises metadata comprising at least one of the following: an identifier of the deliverer; a name of the deliverer; a type of the deliverer; a description for the deliverer; priority of the deliverer; and a target bucket type of the deliverer.

According to another aspect of the invention, there is provided a computer program for aggregating data. The computer program is confirgured to perform, when executed by a data processing device, a method comprising: selecting a stage table bucket from a stage table, the bucket comprising source data and being identified by a bucket identifier; reading a subset of the source data contained in the bucket, the subset being determined by predetermined subset definition data; aggregating, based on the subset definition data, the read source data; inserting the aggregated information into an aggregate table bucket in an aggregate table, the aggregate table bucket having the bucket identifier; and updating bucket deliverer metadata.

In one embodiment, the computer program is arranged in a computer-readable medium.

The advantages of the invention relate to improved efficiency in reporting aggregated (summed) data from the original source data.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** one example of a simple prior art data collection and analyzing architecture;
**Figure 2A** discloses a general model of a data management system according to one embodiment of the invention;
**Figure 2B** discloses a general model of a data management system according to another embodiment of the invention;
**Figure 3A** explains the operation of a loading process in a data management system according to one embodiment of the invention;
**Figure 3B** one possible form of bucket metadata according to one embodiment of the invention;
**Figure 3C** explains the operation of a loading process in a data management system according to another embodiment of the invention;
**Figure 4** discloses metadata relating to a delivery process according to one embodiment of the invention;
**Figure 5A** explains the operation of a delivery process in a data management system according to one embodiment of the invention;
**Figure 5B** discloses bucket deliverers metadata according to one embodiment of the invention;
**Figure 5C** explains the operation of a delivery process in a data management system according to another embodiment of the invention;
**Figure 5D** explains the operation of a delivery process in the data management system according to another embodiment of the invention;
**Figure 6** discloses an example of prioritization of delivery processes according to one embodiment of the invention; and
**Figure 7** discloses an embodiment illustrating aggregation of bucket data.

### DETAILED DESCRIPTION OF THE INVENTION

Reference will now be made in detail to the embodiments of the present invention, examples of which are illustrated in the accompanying drawings.

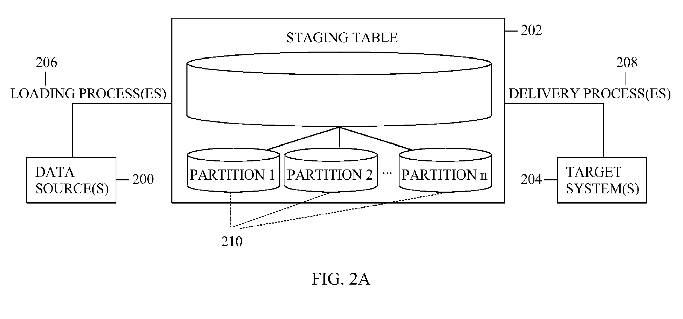

Figure 2A represents a general model of a data management system according to one embodiment of the invention. The model includes at least one data source 200 that is e.g. a database, a flat file, an xml file, message queue etc. Data is read from the data source 200 into a staging area 202 (or staging table) in variable row amounts. The amount of rows loaded from the data source at a time may be e.g. fixed on a system level. In another embodiment, the amount of rows may be variable and it can be determined upon starting a loading process 206 e.g. from a parameter or a parameter file. The concept of varying the amount of rows to be loaded from the data source will be discussed in more detail later.

A term "bucket" or "bucketing" will be used throughout the description to represent the amount of data (e.g. data rows) loaded from the data source 200 at a time.

When a bucket has been read from the data source 200, the data management system determines a unique identifier for the bucket. In one embodiment, the identifier is unique only among the buckets of the same data type. In another embodiment, the identifier is unique among all buckets of all data types. When the unique identifier has been determined for the bucket, the data management system creates a new partition 210 in the staging table 202 for the bucket. At the same time, the partition may be given an identifier. Let's assume that the unique identifier for the bucket would be 00000001. In this case, the identifier for the partition could be e.g. *stage_cust123trans-p00000001. Cust123* identifies the customer and trans identifier the data type (in this case, transaction). P refers to partition and 00000001 is the bucket identifier. Therefore, in one embodiment, the partition identifier directly identifies also the bucket identifier. If the partition identifier does not directly identify also the bucket identifier, in one embodiment, there is a mapping table that creates a mapping between the partition identifier and the bucket identifier.

The data stored in the partitions 210 in the staging table 202 is processed by one or more delivery processes 208. Independently of the loading processes 206 that load data to the stating table 200 from the data source(s) 200, the delivery processes 208 process data stored in the partitions 210. The delivery processes deliver data to target system(s) 204, e.g. to a data warehouse population, data mart population or external interfaces or authorities. There may be several delivery processes that are run in parallel manner.

The loading processes 206 and delivery processes will be discussed in more detail shortly.

The principal idea in the data management system disclosed in Figure 2A is that data is loaded from the data source(s) 200 into separate partitions 210 in the staging table 202. Due to this fact, there are no data locking problems while the data is processed since each partition is a separate physical structure.

Furthermore, in yet another embodiment of the invention there are further advantages. The processes are implemented with asynchronous process modules. Therefore, the modules are detached from each other and they communicate only through common administrative data model or data layer. In other words, the loading processes 206 and delivery processes 208 operate independently from each other. Furthermore, all delivery processes may be run in parallel and they may be isolated from each other. Each delivery process can address the same bucket simultaneously which gives the system ability to be parallelized and scaled up or out when performance boost is needed.

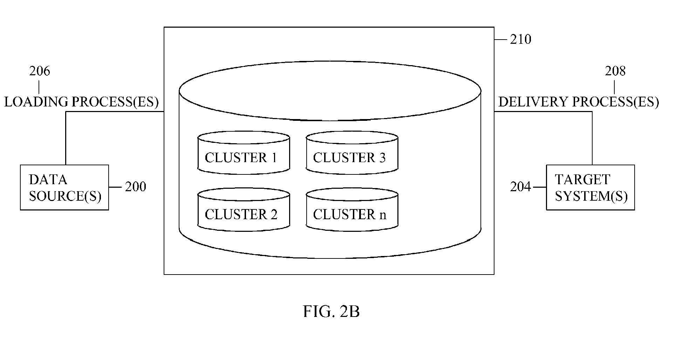

Figure 2B provides an alternative for the physical structure disclosed in Figure 2A. A bucket (i.e. a partition) that contains 1 to n rows of data, can be represented by a cluster on a multidimensional table (MDC). In case of a multidimensional cluster table, there is no need to separately create partitions inside the process since the MDC can automatically faciliate clustering (creation and space allocation) for different buckets. All other operations in the case of the MDC are the same as in the case of partitioned stage table in Figure 2A.

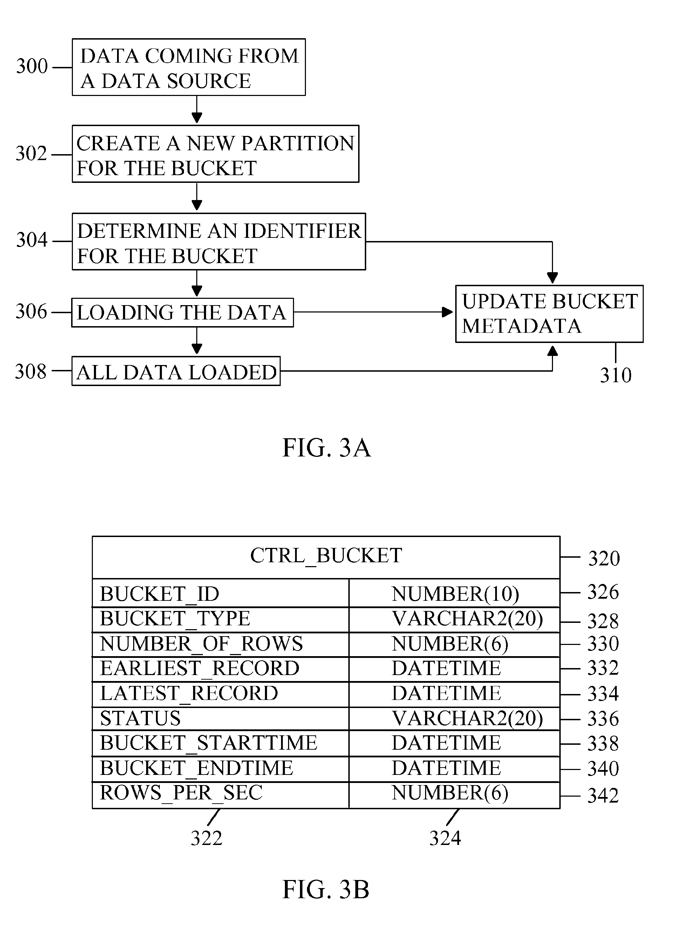

Figure 3A explains the operation of a loading process in the data management system according to one embodiment of the invention. The operation is explained together with Figure 3B which represents one possible alternative for bucket metadata. The bucket metadata 320 stores information about the bucket. The term 'metadata' is used throughout the description to refer to system information that determines general properties for e.g. data buckets and delivery processes.

When a data source starts to provide data (step 300), a new partition is created for the data (step 302) in a staging table. Before the partition is created for the data, it may be necessary to create a zero partition in the stating table. The zero partition is never touched and therefore there is always one partition (zero partition) in the staging table. In the following a term "bucket" refers to a certain amount of source data that is loaded at a time from the data source. The bucket size may be predetermined (e.g. 50000 rows). In other words, it may be fixed on system level. It may also be variable called upon stage load process launch via parameter or parameter file or it may be decided on performance metrics from metadata on process launch time. An identifier is determined for the bucket (step 304). In one embodiment, the identifier is unique only among the buckets of the same data type. In another embodiment, the identifier is unique among all buckets of all data types. The data management system comprises a control bucket 310 (in other words, a control table or bucket metadata) which stores various pieces of information about the bucket. When the partition has been created and the identifier determined, the loading process updates the bucket metadata 320 and adds a new entry (i.e., a new row) for the bucket. The following pieces of information are added or updated for the bucket in the bucket metadata:
- *BUCKET_ID* (326). E.g. a sequential number starting from 1. Each bucket has a unique identifier (e.g. number). In one embodiment, if the identifiers are sequentially allocated, the identifiers also determine the loading order of buckets into the stating table. In other words, a bucket having a smaller identifier than that of another bucket has been loaded and stored earlier.
- *BUCKET_TYPE* (328). BUCKET_TYPE defines the type of the bucket, for example, 'transaction', 'customer data' etc.
- *STATUS (created)* (336). Current status of the bucket, for example, 'created', 'loading', 'delivering', 'delivered', 'deleted' etc.

When the data loading actually starts (step 306), the actual data rows may be tagged with the bucket identifier (e.g. there is added a bucket_id column to the staging table) and the following pieces of information are added or updated for the bucket in the bucket metadata:
- *STATUS (loading)* (336).
- *BUCKET_STARTTIME* (338). This information indicates a timestamp of the creation of the bucket.

When the bucket has been loaded, the following pieces of information are updated for the bucket in the bucket metadata:
- *NUMBER_OF_ROWS* (330). The number of rows in the bucket.
- *EARLIEST_RECORD* (332). Timestamp of the earliest record/transaction in the bucket.
- *LATEST_RECORD* (334). Timestamp of the latest record/transaction in the bucket.
- *STATUS* (loaded) (336). Current status of the bucket.
- *BUCKET_ENDTIME* (340). Timestamp after finalizing the bucket (all data has been loaded in the partition).
- *ROWS_PER_SEC* (342). The number of rows loaded in the staging table per second.

The column 322 refers to the used variables in general and the column 324 indicates a variable type of each variable. Furthermore, although Figure 3A represents that bucket metadata is updated after certain steps, it is also possible to update the bucket metadata in different process stages than disclosed in Figure 3A. Furthermore, Figure 3B discloses only one embodiment of possible bucket metadata, and therefore in other embodiments the bucket metadata may differ from the bucket metadata disclosed in Figure 3B. For example, at least one of ROWS_PER_SEC, BUCKET_STARTTIME and BUCKET_ENTTIME may be missing in other embodiments or there may be some additional metadata entries.

In one embodiment of the invention, bucketing (that is, the amount of rows) is done initially based on an initial value. Later on based on e.g. the metrics collected from stage loading and data delivery operations may change the initial value. Furthermore, bucket metadata may contain also performance metrics which can be utilized continuously on future bucket sizing functions for best performance (for example, auto throttling, the loading system can adjust itself based on the collected metrics for best possible throughput, central processing unit utilization etc.).

Summarizing the above, buckets contain 1 to n rows of data (variable bucket size) and each bucket is represented by a partition on the staging table. In one embodiment, if there multiple data types, each different data type uses a dedicated staging table. Partitioning the staging table (e.g. a range or a list) is done e.g. based on the bucket identifier which is unique either inside each data type or the whole system. Furthermore, the bucketing also isolates the reading operations. Partitioning the data by buckets enables the data delivery processes to address only the rows of the distinct bucket without indexing the tables. With this structure the staging tables do not have to have any indexes to give performance on bucket reads. Actually, indexing on staging tables may bring lower performance on populating the staging tables on initial load.

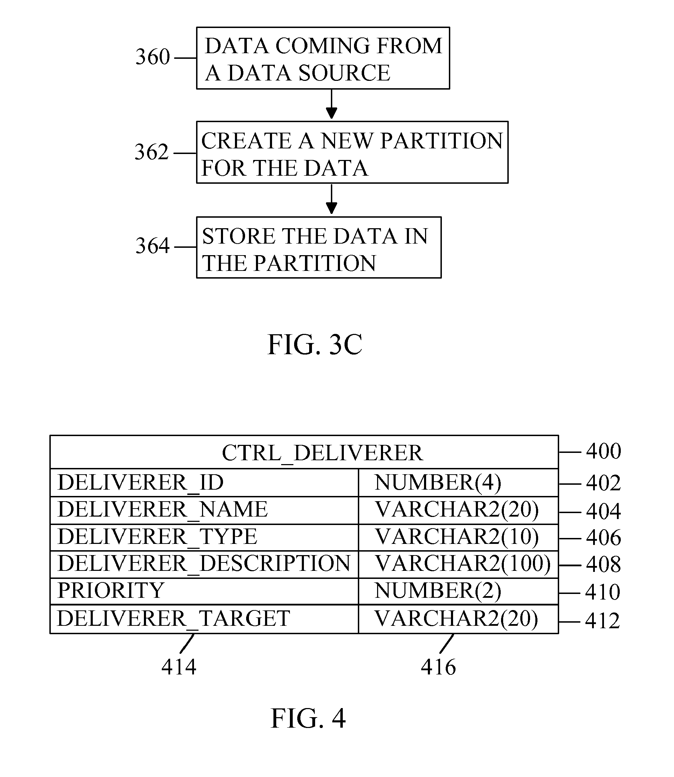

Figure 3C explains the operation of a loading process in the data management system according to another embodiment of the invention.

When a data source starts to provide data (step 360), a new partition is created for the data (step 362) in a staging table. Before the partition is created for the data, it may be necessary to create a zero partition in the staging table. The zero partition is never touched and therefore there is always one partition (zero partition) in the staging table. The data is then stored in the created partition. The same loading process repeats when new data is ready to the loaded into the staging table. The loading process again creates a new partition for the new data and stores the data in the new partition (step 364). The partitions are preferably identified e.g. by sequential numbers. The next set of source data is stored in a partition whose identifier is greater than that of the previous partition. Therefore, the order of the partition identifies also the loading order of the source data in the partitions.

In another embodiment of Figure 3C, a bucket (i.e. a partition) that contains 1 to n rows of data, can be represented by a cluster on a multidimensional table (MDC). In case of a multidimensional cluster table, there is no need to separately create partitions inside the process since the MDC can automatically faciliate clustering (creation and space allocation ) for different buckets. Correspondingly, when a bucket in represented by a cluster in a multidimensional cluster table (MDC), there is no need to physically drop a bucket, only the rows have to be deleted.

Figure 4 discloses possible metadata 400 relating to a delivery process according to one embodiment of the invention. A delivery process is a process that read partitions in a staging table and delivers the data (rows) from the partitions to a target system or target systems. The target system may include e.g. one of the following: a data warehouse structure population, a data mart population, external interfaces and authorities.

The data management system may comprise built-in delivery processes. In another embodiment, it is possible to define new delivery processes as the need arises. The amount of delivery processes is not limited to any certain amount. There can be as many delivery processes as the data management system needs to have. In one embodiment, delivery processes may be prioritized. In other words, for example in one case a data warehouse structure population must be done before any other delivery process is allowed to touch the same bucket. In another embodiment, all the delivery processes stand on the same line and they all can run in parallel.

In the embodiment of Figure 4, each delivery process has been assigned the following metadata:
- *DELIVERER_ID* (402). Unique identifier for the deliverer (i.e. delivery process).
- *DELIVERER_NAME* (404). Name of the delivery process, for example, 'STORAGE', 'DATAMART_SALES', 'DATAMART_OUTLET' etc.
- *DELIVERER_TYPE* (406). Type of the delivery process, for example, 'DW', 'Datamart', 'Interface' etc.
- *DELIVERER_DESCRIPTION* (408). Short description of the delivery process, for example, 'DW population', 'Sales datamart population', 'Interface 1 to authorities' etc.
- *PRIORITY* (410). Priority of the delivery process.
- *DELIVERER_TARGET* (412). Type of the data that the delivery process delivers, for example, 'customer data'. This variable links to BUCKET_TYPE variable in the bucket metadata.

Figure 4 discloses only one embodiment of possible deliverer metadata, and therefore in other embodiments the deliverer metadata may differ from the metadata disclosed in Figure 4. For example, in other embodiment some metadata entries may be missing or there may be some additional metadata entries.

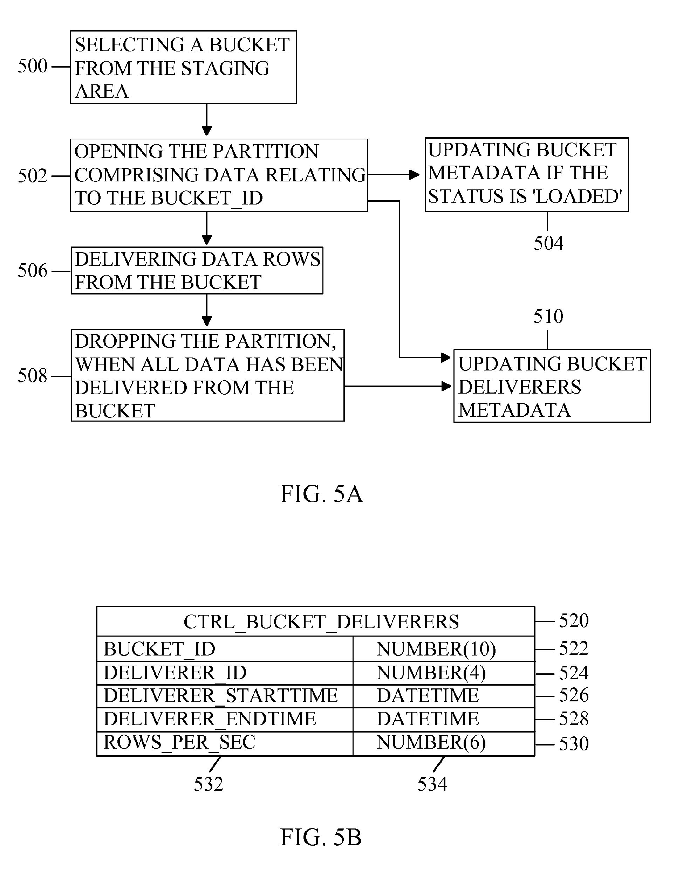

Figure 5A explains the operation of a delivery process in the data management system according to one embodiment of the invention. The operation is explained together with Figure 5B which represents one possible alternative for bucket deliverer's metadata 520. The bucket metadata stores information about the bucket.

A delivery process selects a bucket from the staging area (step 500). The delivery process may select the bucket by determining the smallest bucket identifier which points to a bucket that has not yet been processed. In another embodiment, the bucket selection may be made based on a timestamp in the metadata relating to the bucket. The timestamp used may e.g. be the one that identifies when the bucket has been created. Yet in another embodiment, the selection may be made based on both the bucket identifier and the timestamp. This may be the case e.g. when the sequential identifier "turns" over, that is, starts again from number one. In this case, the bucket having a bucket identifier "1" is not the earliest one since the bucket numbering has started again from the beginning. Therefore, the delivery process may also use the timestamp value in the bucket metadata in determine which one of the buckets is the earliest one. In this example, the buckets are processed in the same order that they were stored in partitions in the loading process. One way to implement is that a sequential identifier is assigned for each bucket. When comparing the identifier, a smaller identifier refers to an earlier bucket.

The delivery process opens the partition holding the data of the bucket identifier (step 502). When the status of a bucket in the bucket metadata is 'loaded', the bucket is waiting for the delivery process to start processing the bucket. 'Loaded' means that the bucket has been successfully loaded into the staging table. When the delivery process starts to process the determined bucket, the status of the bucket is updated as 'delivering' in the bucket metadata (step 504). If the status of the bucket is already 'delivering', it means that that are several different delivery processes that may process the bucket at the same time. Furthermore, if the status of the bucket is already 'delivering', the delivery process leaves the bucket metadata untouched.

When the delivery process starts to deliver data rows from the staging table, each delivery process processing the bucket creates (step 510) a new row with the following pieces of information in the bucket deliverer metadata 520:
- *BUCKET_ID* (522). E.g. a sequential number starting from 1. Each bucket has a unique identifier (number). In one embodiment, if the identifiers are sequentially allocated, the identifiers also determine the loading order of buckets into the stating table. In other words, a bucket having a smaller identifier than that of another bucket has been loaded and stored earlier.
- *DELIVERER_ID* (524). Deliverer identifier.
- *DELIVERER_STARTTIME* (526). Timestamp, when the deliverer started processing.

Next, the delivery process starts to deliver data rows from the bucket (partition) (step 506). When the deliverer has delivered all the data (rows) contained in the bucket, the bucket deliverer's metadata is again updated (step 510) and the partition is dropped (step 508):
- *DELIVERER_ENDTIME* (528). Timestamp, when the deliverer ended processing.
- *ROWS_PER_SEC* (530). The number of rows delivered per second.

The column 532 refers to the used variables in general and the column 534 indicates a variable type of each variable. The length disclosed after each variable type gives one possible length and thus also other lengths can be implemented. Furthermore, although Figure 5A represents that the bucket metadata is updated after certain steps, it is also possible to update the metadata in different process stages than disclosed in Figure 5A. Furthermore, Figure 5B discloses only one embodiment of possible bucket deliverer's metadata, and therefore in other embodiments the metadata may differ from the metadata disclosed in Figure 4. For example, in other embodiment some metadata entries may be missing or there may be some additional metadata entries.

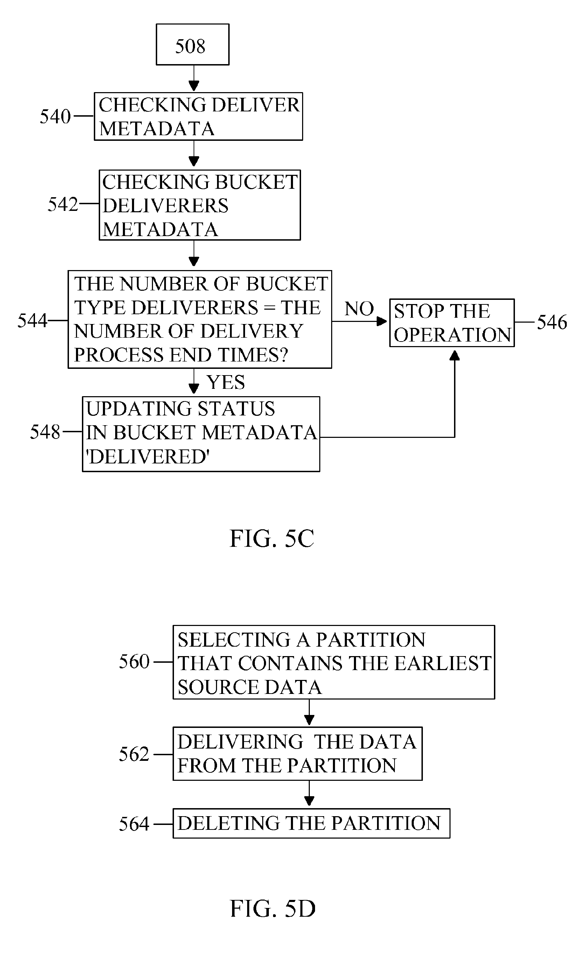

Figure 5A disclosed an embodiment in which a delivery process does not itself update the status information in the bucket metadata as 'delivered'. Figure 5C discloses another embodiment in which the last delivery process processing a bucket (partition) also updates the bucket metadata.

The processing starts from step 508 of Figure 5A. The delivery process checks from the deliverer metadata (see Figure 4) how many delivery processes are assigned to process this particular bucket type (step 540). Next the delivery process checks from the bucket deliverers metadata the number of delivery process end times for the bucket type (step 542). If the number of delivery processes assigned to process the bucket type is the same as the number of end times in the bucket deliverers metadata (step 544), it means that all the delivery processes assigned to process the bucket type have already performed their processing. Therefore, the delivery process updates the status information in the bucket metadata as 'delivered' (step 548). If the number of delivery processes assigned to process the bucket type is not the same as the number of end times in the bucket deliverers metadata, it means that at least one delivery process has not done its processing on the bucket.

Figure 5D explains the operation of a delivery process in the data management system according to another embodiment of the invention. In this embodiment, the data management system comprises only one delivery process.

The delivery process selects from a staging table a partition that contains the earliest source data (step 560). The earliest source data is determined e.g. by partition identifiers. In one embodiment, the partition having the smallest partition identifier contains the earliest source data. In other words, the delivery process processes the data in the staging table by the "first in first out" principle. The oldest partition is processed first. When the oldest partition has been determined, source data stored in the partition is delivered to at least one target system (step 562). When all the data contained in the partition has been delivered, the partition is deleted (step 564).

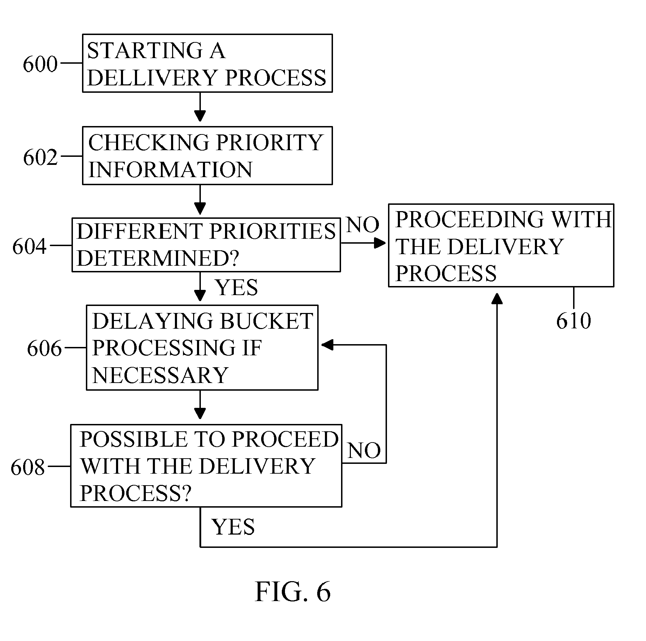

Figure 6 discloses an example of prioritization of delivery processes according to one embodiment of the invention. When a delivery process start processing a bucket (a partition) (step 600), it checks priority information relating to the delivery processes in general (step 602). For example, a system designer may have prioritized some delivery processes before others. A first delivery process, for example, may have a priority 01 in its priority field (step 604). At the same time, a second delivery process may have a priority 02 in its priority field. This means, for example, that the first delivery process has to be finished before the second delivery process may start processing the same bucket (step 606). The first delivery process may determine, for example, from the bucket deliverers metadata (see Figure 5B) whether the second delivery process has finished its processing with the bucket. If, in this case, there is an end time updated in the bucket deliverers metadata for the second delivery process (step 608), the first delivery process is now able to may proceed with its bucket processing (step 610).

If all the delivery processed have the same priority or there has not been assigned priorities to the delivery processes at all, the delivery process may proceed with its bucket processing (step 610).

The above prioritization example was described by using only two delivery processes. It is evident to a man skilled in the art that there may be more than two delivery processes which have been prioritized based on some prioritization scheme.

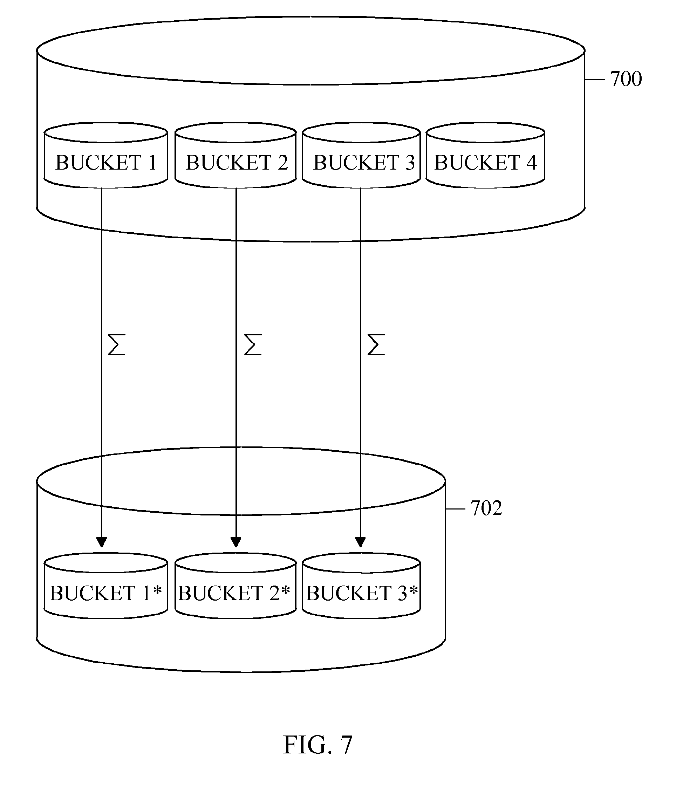

Figure 7 discloses an embodiment illustrating aggregation of bucket data. Buckets 1-3 (i.e. clusters) in a multidimensional table 700 comprise data that has been read from a data source 200. A unique identifier is assigned for each bucket.

In the embodiment disclosed in Figure 7, a subset of data in the multidimensional table (MDC) 700 is aggregated into an aggregate table 702, which is also an MDC. Aggregation means that original data is summed (aggregated) based on one or more factor when storing data into the aggregate table 702. The aggregation process is controlled by subset definition data. The subset definition data determines which pieces of data of the bucket in the multidimensional table 700 are read and aggregated into the aggregate table 702.

In the following, the concept of aggregation is illustrated with an example. It is now assumed that the multidimensional table 700 comprises four buckets. Each bucket in the multidimensional table includes several rows of information. Buckets 1-3 relate to day 1 and bucket 4 relates to day 2. Let's now assume that the buckets represent sales of a company that has three branch offices; A, B and C. The company sells five different products in the branch offices. Now, the goal is to get information about product 1 that has been sold by branch office B on day 1. In other words, the subset definition data determines that "product 1", "branch office B", "day 1" are wanted parameters. Furthermore, the subset definition data determines that the aggregate table should store the total amount of "product 1" sold by "branch office B" on "day 1".

The aggregation itself is provided by a deliverer process that reads data from the buckets. In this case, the deliverer process has been configured so that it reads from the four buckets only data relating to day 1, to product 1 and to branch office B. In this case, the deliverer process processes only buckets 1, 2 and 3 since bucket 4 relates to day 2. From buckets 1, 2 and 3, the deliverer process picks data that match to its configuration data. The summed (aggregated) data is then stored into another multidimensional table, i.e. to the aggregate table 702. As a results of aggregation, the aggregate table 702 comprises three rows of data, one in each bucket 1*, 2* and 3*. Each row identifies the parameters "day 1", "branch office B", "product 1", and additionally the total amount of the product (aggregated data) sold. The contents of the buckets in the aggregate table 702 could be as follows:
Bucket 1: "day 1", "branch office B", "product 1" "20"
Bucket 2: "day 1", "branch office B", "product 1" "19"
Bucket 3: "day 1", "branch office B", "product 1" "5"

In other words, each bucket in the aggregate table 702 comprises aggregate data corresponding to buckets in the multidimensional table 700. The aggregated data in the buckets in the aggregate table 702 also include the same bucket identifier of the buckets in the multidimensional table 700. Thus, the aggregated data is traceable to a certain bucket in the multidimensional table comprising the original loaded source data.

Furthermore, since the the original source data in the original buckets has already been aggregated into the aggregate table (based on the subset definition data), it is possible easily and quickly to further process and to calculate the total amount sold products by summing up the three total amounts (20, 19, 5) from buckets 1*, 2* and 3* in the aggregate table 702.

The aggregation process diclosed above may be implemented as a delivery process illustrated already more specifically e.g. in Figures 4, 5 and 6 and the corresponding description. Furthtermore, it is evident to a man skilled in the art the aggregated data itself may relate to any possible form of statistical data, e.g. to sales information, telephone call records, usage data etc.

By executing the above aggregation process it is possible to get near real-time reports from the original source data. In one embodiment of the invention, the aggregation process is performed only to a limited amount of data. Since the aggregation process is implemented as a delivery process ("a consumer") of loaded source data, each processed bucket is not released (or deleted) until all delivery processes processing the same data bucket have been executed. Therefore, in one embodiment, only the most time sensitive prosesses that perform aggregation are executed in order to be able to release (or delete) the processed bucket.

It is evident to a man skilled in the art that the MDC is only an example of a possible physical implementation. Therefore, it is also possible to use e.g. the earlier disclosed partitioned stage table as a physical implementation.

In general, the invention is applicable for all environments that can utilize range or list partitioning or multidimensional clustering on tables. Databases supporting either of these partitioning schemes are e.g. Oracle, MySQL, DB2, Teradata, Microsoft SQLServer and Sybase.

The exemplary embodiments can include, for example, any suitable servers, workstations, and the like, capable of performing the processes of the exemplary embodiments.

It is to be understood that the exemplary embodiments are for exemplary purposes, as many variations of the specific hardware used to implement the exemplary embodiments are possible, as will be appreciated by those skilled in the hardware and/or software art(s). For example, the functionality of one or more of the components of the exemplary embodiments can be implemented via one or more hardware and/or software devices.

The exemplary embodiments can store information relating to various processes described herein. This information can be stored in one or more memories, such as a hard disk, optical disk, magnetooptical disk, RAM, and the like. One or more databases can store the information used to implement the exemplary embodiments of the present inventions. The databases can be organized using data structures (e.g., records, tables, arrays, fields, graphs, trees, lists, and the like) included in one or more memories or storage devices listed herein. The processes described with respect to the exemplary embodiments can include appropriate data structures for storing data collected and/or generated by the processes of the devices and subsystems of the exemplary embodiments in one or more databases.

All or a portion of the exemplary embodiments can be conveniently implemented using one or more general purpose processors, microprocessors, digital signal processors, micro-controllers, and the like, programmed according to the teachings of the exemplary embodiments of the present inventions, as will be appreciated by those skilled in the computer and/or software art(s). Appropriate software can be readily prepared by programmers of ordinary skill based on the teachings of the exemplary embodiments, as will be appreciated by those skilled in the software art. In addition, the exemplary embodiments can be implemented by the preparation of application-specific integrated circuits or by interconnecting an appropriate network of conventional component circuits, as will be appreciated by those skilled in the electrical art(s). Thus, the exemplary embodiments are not limited to any specific combination of hardware and/or software.

Stored on any one or on a combination of computer readable media, the exemplary embodiments of the present inventions can include software for controlling the components of the exemplary embodiments, for driving the components of the exemplary embodiments, for enabling the components of the exemplary embodiments to interact with a human user, and the like. Such software can include, but is not limited to, device drivers, firmware, operating systems, development tools, applications software, and the like. Such computer readable media further can include the computer program product of an embodiment of the present inventions for performing all or a portion (if processing is distributed) of the processing performed in implementing the inventions. Computer code devices of the exemplary embodiments of the present inventions can include any suitable interpretable or executable code mechanism, including but not limited to scripts, interpretable programs, dynamic link libraries (DLLs), Java classes and applets, complete executable programs, Common Object Request Broker Architecture (COR-BA) objects, and the like. Moreover, parts of the processing of the exemplary embodiments of the present inventions can be distributed for better performance, reliability, cost, and the like.

As stated above, the components of the exemplary embodiments can include computer readable medium or memories for holding instructions programmed according to the teachings of the present inventions and for holding data structures, tables, records, and/or other data described herein. Computer readable medium can include any suitable medium that participates in providing instructions to a processor for execution. Such a medium can take many forms, including but not limited to, non-volatile media, volatile media, transmission media, and the like. Non-volatile media can include, for example, optical or magnetic disks, magneto-optical disks, and the like. Volatile media can include dynamic memories, and the like. Common forms of computer-readable media can include, for example, a floppy disk, a flexible disk, hard disk, magnetic tape, any other suitable magnetic medium, a CD-ROM, CDR, CD-RW, DVD, DVD-ROM, DVD±RW, DVD±R, Blu-Ray, HD-DVD, any other suitable optical medium, punch cards, paper tape, optical mark sheets, any other suitable physical medium with patterns of holes or other optically recognizable indicia, a RAM, a PROM, an EPROM, a FLASH-EPROM, any other suitable memory chip or cartridge, a carrier wave or any other suitable medium from which a computer can read.

While the present inventions have been described in connection with a number of exemplary embodiments, and implementations, the present inventions are not so limited, but rather cover various modifications, and equivalent arrangements, which fall within the purview of prospective claims.

## Claims

1. A method for aggregating data with a deliverer, **characterised in that** the method comprises:
selecting a stage table bucket from a stage table, the bucket comprising source data and being identified by a bucket identifier;
reading a subset of the source data contained in the bucket, the subset being determined by predetermined subset definition data;
aggregating, based on the subset definition data, the read subset of the source data;
inserting the aggregated information into an aggregate table bucket in an aggregate table, the aggregate table bucket having the bucket identifier; and
updating bucket deliverer metadata.

2. The method according to claim 1, further comprising:
updating status information of the bucket in bucket metadata to 'delivering', when the bucket deliverer starts delivering the data in the bucket.

3. The method according to claim 1 or 2, further comprising:
updating the bucket deliverer metadata, when starting processing the bucket, the updating comprising:
adding a deliverer identifier in the bucket deliverer metadata; and
adding a deliverer start time in the bucket deliverer metadata.

4. The method according to claim 3, further comprising:
updating the bucket deliverer metadata, when ending the bucket processing, the updating comprising:
adding a deliverer end time in the bucket deliverer metadata.

5. The method according to claim 4, further comprising:
checking, whether the bucket deliverer metadata comprises other deliverer identifiers identifying delivery processes that process the same bucket;
checking, whether there exists a deliverer end time for each deliverer identifier; and
updating the status information in the bucket metadata to 'delivered', when there exists a deliverer end time for each deliverer identifier.

6. The method according to any of claims 1 - 5, wherein the deliverer comprises metadata comprising at least one of the following:
an identifier of the deliverer;
a name of the deliverer;
a type of the deliverer;
a description for the deliverer;
priority of the deliverer; and
a target bucket type of the deliverer.

7. A computer program for aggregating data, **characterised in that** the computer program is configured to perform, when executed by a data processing device, the method of any of claims 1 - 6.

8. The computer program of claim 7, wherein the computer program is arranged on a computer-readable medium.

9. A delivery module for delivering data,
**characterised in that** the delivery module is configured to:
select a stage table bucket from a stage table, the bucket comprising source data and being identified by a bucket identifier;
read a subset of the source data contained in the bucket, the subset being determined by predetermined subset definition data;
aggregate, based on the subset definition data, the read subset of the source data;
insert the aggregated information into an aggregate table bucket in an aggregate table, the aggregate table bucket having the bucket identifier; and
update bucket deliverer metadata.

10. The delivery module according to claim 9, further configured to:
update status information of the bucket in bucket metadata to 'delivering', when the bucket deliverer starts delivering the data in the bucket.

11. The delivery module according to claim 9 or 10, further configured to:
update the bucket deliverer metadata, when starting processing the bucket, the updating comprising:
adding a deliverer identifier in the bucket deliverer metadata; and
adding a deliverer start time in the bucket deliverer metadata.

12. The delivery module according to claim 11, further configured to:
update the bucket deliverer metadata, when ending the bucket processing, the updating comprising:
adding a deliverer end time in the bucket deliverer metadata.

13. The delivery module according to claim 12, further configured to:
check, whether the bucket deliverer metadata comprises other deliverer identifiers identifying delivery processes that process the same bucket;
check, whether there exists a deliverer end time for each deliverer identifier; and
update the status information in the bucket metadata to 'delivered', when there exists a deliverer end time for each deliverer identifier.

14. The delivery module according to any of claims 9 - 13, wherein the delivery module comprises metadata comprising at least one of the following:
an identifier of the deliverer;
a name of the deliverer;
a type of the deliverer;
a description for the deliverer;
priority of the deliverer; and
a target bucket type of the deliverer.
